# NEW EUROPEAN PATENT SPECIFICATION

(11) **EP 1 163 843 B2**
(45) Date of publication and mention of the opposition decision: **15.10.2014**
(45) Mention of the grant of the patent: 03.08.2005
(21) Application number: 01201620.0
(22) Date of filing: 04.05.2001
(51) Int. Cl.: A01K 29/00, A01K 1/12, A01K 15/02

(54) **AN IMPLEMENT FOR SUCCESSIVELY RECEIVING AND/OR TREATING INDIVIDUAL ANIMALS OUT OF A GROUP OF ANIMALS**
VORRICHTUNG ZUM NACHEINANDER AUFNEHMEN UND/ODER BEHANDELN VON EINZELNEN TIEREN AUS EINER TIERHERDE
DISPOSITIF POUR RECEVOIR ET/OU TRAITER SUCCESSIVEMENT DES ANIMAUX INDIVIDUELS D'UN TROUPEAU D'ANIMAUX

(30) Priority: 14.06.2000 NL 1015435
(43) Date of publication of application: 19.12.2001
(73) Proprietor: Lely Enterprises AG, 6300 Zug (CH)
(72) Inventor: van der Lely, Alexander, 3065 NA Rotterdam (NL)
(74) Representative: Corten, Maurice Jean F.M.

(56) References cited:
- EP-A- 0 624 313
- EP-A1- 0 189 954
- EP-A1- 0 608 941
- WO-A-98/00006
- WO-A2-94/09616
- WO-A2-96/19917
- NL-A- 8 601 297
- US-A- 5 950 562
- CAROLIEN KETELAAR-DE LAUWERE FULLY AUTOMATIC MILKING IN LOOSE HOUSINGSYSTEMS: 'Cow behaviour and managerial aspects of fully automatic milking in loose housingsystems', 1999 pages 13,15-22 - 154-169

## Description

The invention relates to an implement as described in the preamble of claims 1, 2, 3 and 4.

Such an implement is known. The animals can for example be fed or milked in the implement. In order to ensure that the animals visit the implement sufficiently often, there are provided means for stimulating this. Said means comprise for example an implement for supplying concentrate. The known implement has inter alia the disadvantage that in certain periods too few animals visit the implement. This may result in longer waiting times for the animals at other points of time. In other periods too many animals wish to visit the implement. It is both in the interest of the animals and the user of the implement that the visits of the animals to the implement are spread as homogeneously as possible over the time.

Document NL-A-8601297 discloses a known implement in which the animals are called to a feeding station one by one by means of an individual sound signal.

The invention aims at improving the known implements. According to the invention this is achieved by the measures indicated in the characterizing part of claim 1 or claim 2 or claim 3 or claim 4. The invention is based on the insight that, by purposeful extra or less stimulation of the animals to visit the implement, there can be achieved a less varying visiting frequency in the course of time.

The measures indicated in the characterizing part of claim 1 respectively claim 2 enable extra respectively less stimulation of the animals to visit the implement during a known or to be determined appropriate time interval. The measures indicated in the characterizing part of claim 3 respectively claim 4 make it possible to determine, repeatedly if required, the visiting frequency pattern and to choose, on the basis thereof, a constantly optimal time interval for extra stimulation respectively less stimulation of the animals.

The invention will be explained in further detail with reference to some examples.

An implement, such as a concentrate feeding station and/or a milking robot for example, is suitable for successively receiving and/or treating individual animals out of a group of animals which are allowed to move about freely in an area intended therefor and which are allowed to visit the implement individually. The implement is provided with means, such as a concentrate feeding box for example, for stimulating the animals to visit the implement.

According to an aspect of the invention, the implement is further provided with means for recording and/or determining a (possibly periodically recurring) time interval in which the expected visiting frequency of the group of animals to the implement is below a low threshold value (respectively above a high threshold value), and with means for activating, during said time interval, means for extra (respectively less) stimulation of the animals to visit the implement.

The time interval with the lower (respectively higher) visiting frequency may be known from tests or from professional literature and be recorded in the implement (e.g. be stored in a computer). The time interval can also be determined, e.g. by means of a computer which disposes of relevant (historical and/or measured) reference data. For example, a weather station can supply data in relation to particular weather conditions or weather changes upon which the animals have appeared to be less (respectively more) inclined to visit the implement in a coming time interval. The use of a milking robot also enables extra (respectively less) stimulation of the animals for a while, after a cleaning pause. The low threshold value (respectively the high threshold value) may have a fixed value or may be a percentage of the average visiting frequency. A control device such as a computer can activate the means for extra (respectively less) stimulation of the animals during the time interval. Said means may comprise for example a reservoir with fodder or drink which is very attractive to the animals (respectively fodder or drink with is little attractive to the animals), the computer being suitable for actuating a metering device.

According to again another aspect of the invention, the implement is further provided with means for determining the visiting frequency pattern of the group of animals to the implement in the course of time, means for determining a (possibly periodically recurring) time interval in which the visiting frequency of the animals to the implement is lower than a low threshold value (respectively higher than a high threshold value), and means for (periodically) activating, during the predetermined time interval, means for extra (respectively less) stimulation of the animals to visit the implement. The former means may again comprise a computer with the aid of which the visiting frequency pattern is measured. The latter means have already been elucidated in the foregoing. The visiting frequency may for example become very low every 24 hours around three o'clock in the morning. To counteract this, the computer can activate the means for extra stimulation every night from 2.30 to 3.30 a.m. If desired, the visiting frequency pattern can be measured again at intervals of a month for example. It is possible (e.g. because of habituation of the animals) that there will then be found another periodically recurring time interval for extra stimulation of the animals. As a result of the repeated measurements the optimal time interval will always be found.

The means for extra (respectively less) stimulation may be designed so as to be periodically activable and deactivable. The implement may further be provided with an animal identification system in which the means for extra (respectively less) stimulation on the basis of data from the animal identification system set the nature and/or the duration and/or the intensity of the extra (respectively less) stimulation for each individual animal that visits the implement and is recognized. There may be supplied for example an extra big portion of concentrate when the implement is visited by an animal which has a high milk production or an animal which has not visited the implement for a long time already. In such a situation, upon supplying extra attractive feed at the beginning of the visit during a predetermined period of time, it is also possible to prolong said predetermined period of time.

As already described in the foregoing, the means for extra (respectively less) stimulation may comprise a unit for feeding and/or watering an animal that visits the implement, said unit being provided in the implement, as well as a control device, such as a computer, and a metering device for the unit, said metering device being controllable by the control device. The control device may be suitable for actuating the metering device in such a manner that the latter, upon extra (respectively less) stimulation of the animals, supplies a larger (respectively smaller) amount of concentrate than normally. The control device may also be suitable for actuating the metering device in such a manner that the latter, upon extra (respectively less) stimulation of the animals, supplies fodder and/or drink which is extra attractive (respectively less attractive) to the animals.

The implement may be provided with means for giving a signal to the animals at least upon activation of the means for extra (respectively less) stimulation of the animals. This may draw the attention of the animals for example to the presence of the extra stimulus. The signal may be for example an audio signal or a visual or audio-visual signal which is given at the beginning of the time interval or during (a part of) the time interval.

## Claims

1. An implement for successively receiving and/or treating individual animals out of a group of animals which are allowed to move about freely in an area intended therefor and which are allowed individually to visit the implement, such as for example a concentrate feeding station and/or a milking robot, said implement being provided with means for stimulating the animals to visit said implement, **characterized in that** the implement is provided with means for recording and/or determining a possibly periodically recurring time interval in which the expected visiting frequency of the group of animals to the implement is below a low threshold value, and with means for activating, during said time interval, means for extra stimulation of the animals to visit the implement.

2. An implement for successively receiving and/or treating individual animals out of a group of animals which are allowed to move about freely in an area intended therefor and which are allowed individually to visit the implement, such as a concentrate feeding station and/or a milking robot, said implement being provided with means for stimulating the animals to visit said implement, **characterized in that** the implement is provided with means for recording and/or determining a possibly periodically recurring time interval in which the expected visiting frequency of the group of animals to the implement is above a high threshold value, and with means for activating, during said time interval, means for less stimulation of the animals to visit the implement.

3. An implement for successively receiving and/or treating individual animals out of a group of animals which are allowed to move about freely in an area intended therefor and which are allowed individually to visit the implement, such as a concentrate feeding station and/or a milking robot, said implement being provided with means for stimulating the animals to visit said implement, **characterized in that** the implement is provided with means for determining the visiting frequency pattern of the group of animals to the implement in the course of time, means for determining a possibly periodically recurring time interval in which the visiting frequency of the animals to the implement is lower than a low threshold value, and means for activating, during the predetermined time interval, means for extra stimulation of the animals to visit the implement.

4. An implement for successively receiving and/or treating individual animals out of a group of animals which are allowed to move about freely in an area intended therefor and which are allowed individually to visit the implement, such as a concentrate feeding station and/or a milking robot, said implement being provided with means for stimulating the animals to visit said implement, **characterized in that** the implement is provided with means for determining the visiting frequency pattern of the group of animals to the implement in the course of time, means for determining a possibly periodically recurring time interval in which the visiting frequency of the animals to the implement is higher than a high threshold value, and means for activating, during the predetermined time interval, means for less stimulation of the animals to visit the implement.

5. An implement as claimed in any one of claims 1 and 3, **characterized in that** the means for extra stimulation are capable of being activated and deactivated periodically.

6. An implement as claimed in any one of claims 2 and 4, **characterized in that** the means for less stimulation are capable of being activated and deactivated periodically.

7. An implement as claimed in any one of claims 1, 3 and 5, **characterized in that** the implement is provided with an animal identification system and that, on the basis of data from the animal identification system, the means for extra stimulation adjust the nature and/or the duration and/or the intensity of extra stimulation for each individual animal that visits the implement.

8. An implement as claimed in any one of claims 2, 4 and 6, **characterized in that** the implement is provided with an animal identification system and that, on the basis of data from the animal identification system, the means for less stimulation adjust the nature and/or the duration and/or the intensity of less stimulation for each individual animal that visits the implement.

9. An implement as claimed in any one of claims 1, 3, 5 and 7, **characterized in that** the means for extra stimulation comprise a unit for feeding and/or watering an animal that visits the implement, said unit being provided in the implement, as well as a control device, such as a computer, and a metering device for the unit, said metering device being controllable by the control device.

10. An implement as claimed in any one of claims 2, 4, 6 and 8, **characterized in that** the means for less stimulation comprise a unit for feeding and/or watering an animal that visits the implement, said unit being provided in the implement, as well as a control device, such as a computer, and a metering device for the unit, said metering device being controllable by the control device.

11. An implement as claimed in claim 9 or 10, **characterized in that** the control device is suitable for actuating the metering device in such a manner that the latter, upon extra respectively less stimulation of the animals, supplies a larger respectively a smaller amount of concentrate than normally.

12. An implement as claimed in any one of claims 9 to 11, **characterized in that** the control device is suitable for actuating the metering device in such a manner that the latter, upon extra respectively less stimulation of the animals, supplies fodder and/or drink which is extra attractive to the animals, respectively fodder and/or drink which is less attractive to the animals.

13. An implement as claimed in any one of claims 1 to 12, **characterized in that** the implement is provided with means for giving a signal to the animals at least upon activation of the means for extra, respectively less, stimulation of the animals.

## Patentansprüche

1. Anlage zum aufeinanderfolgenden Aufnehmen und/oder Behandeln einzelner Tiere aus einer Gruppe von Tieren, die sich in einem hierfür vorgesehenen Gebiet frei bewegen und die Anlage, beispielsweise eine Kraftfutter-Fütterungsstation und/oder einen Melkroboter, einzeln aufsuchen können, wobei die Anlage Vorrichtungen aufweist, um die Tiere zum Aufsuchen der Anlage zu stimulieren,
**dadurch gekennzeichnet, daß** die Anlage mit einer Vorrichtung versehen ist, um einen möglicherweise periodisch wiederkehrenden Zeitraum aufzuzeichnen und/oder zu ermitteln, in dem die erwartete Häufigkeit der Besuche der Gruppe von Tieren in der Anlage einen niedrigen Grenzwert unterschreitet, sowie mit einer Vorrichtung, um während des Zeitraumes eine Vorrichtung zu aktivieren, die die Tiere zum Aufsuchen der Anlage besonders stimuliert.

2. Anlage zum aufeinanderfolgenden Aufnehmen und/oder Behandeln einzelner Tiere aus einer Gruppe von Tieren, die sich in einem hierfür vorgesehenen Gebiet frei bewegen und die Anlage, beispielsweise eine Kraftfutter-Fütterungsstation und/oder einen Melkroboter, einzeln aufsuchen können, wobei die Anlage Vorrichtungen aufweist, um die Tiere zum Aufsuchen der Anlage zu stimulieren,
**dadurch gekennzeichnet, daß** die Anlage mit einer Vorrichtung versehen ist, um einen möglicherweise periodisch wiederkehrenden Zeitraum aufzuzeichnen und/oder zu ermitteln, in dem die erwartete Häufigkeit der Besuche der Gruppe von Tieren in der Anlage einen hohen Grenzwert überschreitet, sowie mit einer Vorrichtung, um während des Zeitraumes eine Vorrichtung zu aktivieren, die die Tiere zum Aufsuchen der Anlage weniger stimuliert.

3. Anlage zum aufeinanderfolgenden Aufnehmen und/oder Behandeln einzelner Tiere aus einer Gruppe von Tieren, die sich in einem hierfür vorgesehenen Gebiet frei bewegen und die Anlage, beispielsweise eine Kraftfutter-Fütterungsstation und/oder einen Melkroboter, einzeln aufsuchen können, wobei die Anlage Vorrichtungen aufweist, um die Tiere zum Aufsuchen der Anlage zu stimulieren,
**dadurch gekennzeichnet, daß** die Anlage mit einer Vorrichtung versehen ist, um das Muster der Häufigkeit der Besuche der Gruppe von Tieren in der Anlage im Verlaufe der Zeit zu ermitteln, mit einer Vorrichtung, um einen möglicherweise periodisch wiederkehrenden Zeitraum zu ermitteln, in dem die Häufigkeit der Besuche der Tiere in der Anlage einen niedrigen Grenzwert unterschreitet, sowie mit einer Vorrichtung, um während des vorgegebenen Zeitraumes eine Vorrichtung zu aktivieren, die die Tiere zum Aufsuchen der Anlage besonders stimuliert.

4. Anlage zum aufeinanderfolgenden Aufnehmen und/oder Behandeln einzelner Tiere aus einer Gruppe von Tieren, die sich in einem hierfür vorgesehenen Gebiet frei bewegen und die Anlage, beispielsweise eine Kraftfutter-Fütterungsstation und/oder einen Melkroboter, einzeln aufsuchen können, wobei die Anlage Vorrichtungen aufweist, um die Tiere zum Aufsuchen der Anlage zu stimulieren,
**dadurch gekennzeichnet, daß** die Anlage mit einer Vorrichtung versehen ist, um das Muster der Häufigkeit der Besuche der Gruppe von Tieren in der Anlage im Verlaufe der Zeit zu ermitteln, mit einer Vorrichtung, um einen möglicherweise periodisch wiederkehrenden Zeitraum zu ermitteln, in dem die Häufigkeit der Besuche der Tiere in der Anlage einen hohen Grenzwert überschreitet, sowie mit einer Vorrichtung, um während des vorgegebenen Zeitraumes eine Vorrichtung zu aktivieren, die die Tiere zum Aufsuchen der Anlage weniger stimuliert.

5. Anlage nach einem der Ansprüche 1 und 3,
**dadurch gekennzeichnet, daß** die Vorrichtung zur besonderen Stimulierung in regelmäßigen Abständen aktiviert und deaktiviert werden kann.

6. Anlage nach einem der Ansprüche 2 und 4,
**dadurch gekennzeichnet, daß** die Vorrichtung zur geringeren Stimulierung in regelmäßigen Abständen aktiviert und deaktiviert werden kann.

7. Anlage nach einem der Ansprüche 1, 3 und 5,
**dadurch gekennzeichnet, daß** die Anlage mit einem Tieridentifikationssystem ausgestattet ist, und daß auf der Basis von Daten von dem Tieridentifikationssystem die Vorrichtung zur besonderen Stimulierung die Art und/oder die Dauer und/oder die Intensität der besonderen Stimulierung für jedes einzelne Tier einstellt, das die Anlage aufsucht.

8. Anlage nach einem der Ansprüche 2, 4 und 6,
**dadurch gekennzeichnet, daß** die Anlage mit einem Tieridentifikationssystem ausgestattet ist, und daß auf der Basis von Daten von dem Tieridentifikationssystem die Vorrichtung zur geringeren Stimulierung die Art und/oder die Dauer und/oder die Intensität der geringeren Stimulierung für jedes einzelne Tier einstellt, das die Anlage aufsucht.

9. Anlage nach einem der Ansprüche 1, 3, 5 und 7,
**dadurch gekennzeichnet, daß** die Vorrichtung zur besonderen Stimulierung eine Einheit zum Füttern und/oder Tränken eines die Anlage aufsuchenden Tieres umfaßt, wobei die Einheit in der Anlage angeordnet ist, sowie eine Steuervorrichtung, wie z. B. einen Computer, und eine Dosiervorrichtung für die Einheit, wobei die Dosiervorrichtung von der Steuervorrichtung gesteuert werden kann.

10. Anlage nach einem der Ansprüche 2, 4, 6 und 8,
**dadurch gekennzeichnet, daß** die Vorrichtung zur geringeren Stimulierung eine Einheit zum Füttern und/oder Tränken eines die Anlage aufsuchenden Tieres umfaßt, wobei die Einheit in der Anlage angeordnet ist, sowie eine Steuervorrichtung, wie z. B. einen Computer, und eine Dosiervorrichtung für die Einheit, wobei die Dosiervorrichtung von der Steuervorrichtung gesteuert werden kann.

11. Anlage nach Anspruch 9 oder 10,
**dadurch gekennzeichnet, daß** die Steuervorrichtung geeignet ist, die Dosiervorrichtung in der Weise zu betätigen, daß diese bei besonderer bzw. geringerer Stimulierung der Tiere eine größere bzw. eine kleinere Menge an Kraftfutter als üblich liefert.

12. Anlage nach einem der Ansprüche 9 bis 11,
**dadurch gekennzeichnet, daß** die Steuervorrichtung geeignet ist, die Dosiervorrichtung in der Weise zu betätigen, daß diese bei besonderer bzw. geringerer Stimulierung der Tiere Futter und/oder Trinkflüssigkeit zuführt, das für die Tiere besonders attraktiv ist, bzw. Futter und/oder Trinkflüssigkeit, das für die Tiere weniger attraktiv ist.

13. Anlage nach einem der Ansprüche 1 bis 12,
**dadurch gekennzeichnet, daß** die Anlage mit einer Vorrichtung versehen ist, um zumindest bei Betätigung der Vorrichtung zur besonderen bzw. geringeren Stimulierung der Tiere ein Signal an die Tiere zu geben.

## Revendications

1. Dispositif pour recevoir et/ou traiter successivement des animaux individuels d'un troupeau d'animaux qui sont autorisés à se déplacer librement dans une zone prévue à cette intention et qui sont autorisés à visiter individuellement le dispositif, tel que par exemple une station d'alimentation en concentré et/ou un robot de traite, ledit dispositif étant muni de moyens pour stimuler les animaux pour qu'ils visitent ledit dispositif, **caractérisé en ce que** le dispositif est muni de moyens pour enregistrer et/ou déterminer un intervalle de temps éventuellement périodiquement récurrent dans lequel la fréquence de visite attendue du troupeau d'animaux au dispositif est inférieure à une valeur de seuil basse, et de moyens pour activer, pendant ledit intervalle de temps, des moyens pour une stimulation supplémentaire des animaux à visiter le dispositif.

2. Dispositif pour recevoir et/ou traiter successivement des animaux individuels d'un troupeau d'animaux qui sont autorisés à se déplacer librement dans une zone prévue à cette intention et qui sont autorisés à visiter individuellement le dispositif, tel que par exemple une station d'alimentation en concentré et/ou un robot de traite, ledit dispositif étant muni de moyens pour stimuler les animaux pour qu'ils visitent ledit dispositif, **caractérisé en ce que** le dispositif est muni de moyens pour enregistrer et/ou déterminer un intervalle de temps éventuellement périodiquement récurrent dans lequel la fréquence de visite attendue du troupeau d'animaux au dispositif est supérieure à une valeur de seuil haute, et de moyens pour activer, pendant ledit intervalle de temps, des moyens pour une stimulation moindre des animaux à visiter le dispositif.

3. Dispositif pour recevoir et/ou traiter successivement des animaux individuels d'un troupeau d'animaux qui sont autorisés à se déplacer librement dans une zone prévue à cette intention et qui sont autorisés à visiter individuellement le dispositif, tel que par exemple une station d'alimentation en concentré et/ou un robot de traite, ledit dispositif étant muni de moyens pour stimuler les animaux pour qu'ils visitent ledit dispositif, **caractérisé en ce que** le dispositif est muni de moyens pour déterminer le modèle de fréquence de la visite du troupeau d'animaux au dispositif au cours du temps, de moyens pour déterminer un intervalle de temps éventuellement périodiquement récurrent dans lequel la fréquence de visite des animaux au dispositif est inférieure à une valeur de seuil basse, et de moyens pour activer, pendant l'intervalle de temps prédéterminé, des moyens pour une stimulation supplémentaire des animaux à visiter le dispositif.

4. Dispositif pour recevoir et/ou traiter successivement des animaux individuels d'un troupeau d'animaux qui sont autorisés à se déplacer librement dans une zone prévue à cette intention et qui sont autorisés à visiter individuellement le dispositif, tel que par exemple une station d'alimentation en concentré et/ou un robot de traite, ledit dispositif étant muni de moyens pour stimuler les animaux pour qu'ils visitent ledit dispositif, **caractérisé en ce que** le dispositif est muni de moyens pour déterminer le modèle de fréquence de la visite du troupeau d'animaux au dispositif au cours du temps, de moyens pour déterminer un intervalle de temps éventuellement périodiquement récurrent dans lequel la fréquence de visite des animaux au dispositif est supérieure à une valeur de seuil haute, et de moyens pour activer, pendant l'intervalle de temps prédéterminé, des moyens pour une stimulation moindre des animaux à visiter le dispositif.

5. Dispositif selon l'une quelconque des revendications 1 et 3, **caractérisé en ce que** les moyens pour une stimulation supplémentaire sont capables d'être activés et désactivés périodiquement.

6. Dispositif selon l'une quelconque des revendications 2 et 4, **caractérisé en ce que** les moyens pour une stimulation moindre sont capables d'être activés et désactivés périodiquement.

7. Dispositif selon l'une quelconque des revendications 1, 3 et 5, **caractérisé en ce que** le dispositif est muni d'un système d'identification d'animal et **en ce que**, sur la base des données en provenance du système d'identification d'animal, les moyens pour une stimulation supplémentaire ajustent la nature et/ou la durée et/ou l'intensité de la stimulation supplémentaire pour chaque animal individuel qui visite le dispositif.

8. Dispositif selon l'une quelconque des revendications 2, 4 et 6, **caractérisé en ce que** le dispositif est muni d'un système d'identification d'animal et **en ce que**, sur la base des données en provenance du système d'identification d'animal, les moyens pour une stimulation moindre ajustent la nature et/ou la durée et/ou l'intensité de la stimulation moindre pour chaque animal individuel qui visite le dispositif.

9. Dispositif selon l'une quelconque des revendications 1, 3, 5 et 7, **caractérisé en ce que** les moyens pour une stimulation supplémentaire comprennent une unité pour nourrir et/ou mouiller un animal qui visite le dispositif, ladite unité étant prévue dans le dispositif, ainsi qu'un dispositif de commande tel qu'un ordinateur, et un dispositif de dosage pour l'unité, ledit dispositif de dosage pouvant être commandé par le dispositif de commande.

10. Dispositif selon l'une quelconque des revendications 2, 4, 6 et 8, **caractérisé en ce que** les moyens pour une stimulation moindre comprennent une unité pour nourrir et/ou mouiller un animal qui visite le dispositif, ladite unité étant prévue dans le dispositif, ainsi qu'un dispositif de commande tel qu'un ordinateur, et un dispositif de dosage pour l'unité, ledit dispositif de dosage pouvant être commandé par le dispositif de commande.

11. Dispositif selon la revendication 9 ou 10, **caractérisé en ce que** le dispositif de commande est approprié pour actionner le dispositif de dosage d'une manière telle que ce dernier, suite à une stimulation respectivement supplémentaire et moindre des animaux, distribue une quantité de concentré respectivement plus grande et plus petite que la normale.

12. Dispositif selon l'une quelconque des revendications 9 à 11, **caractérisé en ce que** le dispositif de commande est approprié pour actionner le dispositif de dosage d'une manière telle que ce dernier, suite à une stimulation respectivement supplémentaire et moindre des animaux, distribue un fourrage et/ou une boisson qui est respectivement plus attractif pour les animaux, et un fourrage et/ou une boisson qui est respectivement moins attractif pour les animaux.

13. Dispositif selon l'une quelconque des revendications 1 à 12, **caractérisé en ce que** le dispositif est muni de moyens pour donner un signal aux animaux au moins lors de l'activation des moyens pour respectivement une stimulation supplémentaire et moindre des animaux.
